(19) Europäisches Patentamt / European Patent Office / Office européen des brevets

(11) **EP 4 746 138 A1**

(12) **EUROPEAN PATENT APPLICATION**
published in accordance with Art. 153(4) EPC

(43) Date of publication:
**20.05.2026   Bulletin 2026/21**

(21) Application number: **24865824.7**

(22) Date of filing: **11.09.2024**

(51) International Patent Classification (IPC):
**H01M 50/131** (2021.01)   **H01M 50/126** (2021.01)
**H01M 50/133** (2021.01)   **H01M 50/105** (2021.01)

(52) Cooperative Patent Classification (CPC):
**B32B 7/12; B32B 15/088; B32B 15/20;
B32B 27/08; B32B 27/32; B32B 27/36;
H01M 50/105; H01M 50/121; H01M 50/124;
H01M 50/126; H01M 50/131; H01M 50/133;
Y02E 60/10**

(86) International application number:
**PCT/KR2024/013769**

(87) International publication number:
**WO 2025/058385 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **11.09.2023   KR 20230120750**

(71) Applicant: **LG Energy Solution, Ltd.
Seoul 07335 (KR)**

(72) Inventors:
• **LEE, Wan Soo
Daejeon 34122 (KR)**

• **KANG, Min Hyeong
Daejeon 34122 (KR)**
• **YU, Hyung Kyun
Daejeon 34122 (KR)**
• **HWANG, Soo Ji
Daejeon 34122 (KR)**
• **SONG, Dae Woong
Daejeon 34122 (KR)**
• **SHIN, Ji Hyun
Daejeon 34122 (KR)**
• **KIM, Gi Woung
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **POUCH FILM LAMINATE, POUCH-TYPE BATTERY CASE, AND POUCH-TYPE SECONDARY BATTERY**

(57)    The present invention relates to a pouch film laminate comprising sequentially laminated substrate layers, a gas barrier layer, and a sealant layer, wherein the sealant layer has a value of $f_T$ represented by [Equation 1] below of 0.32 to 3.1, and a surface roughness (Ra) of the sealant layer is 0.11 μm to 0.75 μm.

$$[Equation\ 1]$$

$$f_T = f_{T2} / f_{T1}$$

In [Equation 1], $f_{T1}$ is a friction coefficient of the sealant layer at T1, $f_{T2}$ is a friction coefficient of the sealant layer at T2, and T1 and T2 are different temperatures.

FIG. 1

**Description**

**TECHNICAL FIELD**

Cross-reference to Related Applications

This application claims the benefit of Korean Patent Application No. 10-2023-0120750, filed on September 11, 2023, the contents of which are incorporated herein by reference.

Technical Field

The present invention relates to a pouch film laminate, a pouch-type battery case and a pouch-type secondary battery. More particularly, the present invention relates to a pouch film laminate with improved formability by having a friction coefficient within a certain range regardless of temperature, a pouch-type battery case and a pouch-type secondary battery.

**BACKGROUND ART**

Secondary batteries are used in small products such as digital cameras, P-DVDs, MP3Ps, mobile phones, PDAs, portable game devices, power tools, and e-bikes, large products requiring high output, such as electric vehicles or hybrid vehicles, as well as power storage devices that store surplus power generation or renewable energy, and backup power storage devices.

Usually, secondary batteries are manufactured by applying an electrode active material slurry to positive and negative current collectors to manufacture positive and negative electrodes, laminating the electrodes on both sides of a separator to form an electrode assembly with a predetermined shape, then accommodating the electrode assembly in a battery case, injecting electrolyte, and sealing.

Secondary batteries are classified into a pouch type and a can type depending on the material of the case that accommodates the electrode assembly. The pouch type accommodates the electrode assembly in a pouch made of a flexible polymer material. The can type accommodates the electrode assembly in a case made of a material such as metal or plastic.

The pouch-type battery case is manufactured by performing press processing on a flexible pouch film laminate to form a cup part. Then, if the cup part is formed, an electrode assembly is accommodated in the receiving space of the cup part, and a sealing part is sealed to manufacture a secondary battery.

Among the press processes, drawing forming is performed by inserting a pouch film into a press device and applying a pressure to a pouch film laminate with a punch to elongate the pouch film laminate. The pouch film laminate is generally formed as a plurality of layers in which a polymer film such as polyethylene terephthalate is laminated on one side of a gas barrier layer of a metal material, and a sealant layer is laminated on the other side.

Recently, as the demand for high-capacity batteries such as electric vehicle batteries and ESS batteries increases, the demand for battery cases that may accommodate more electrode assemblies is increasing. Accordingly, a depth for forming a cup part of the pouch-type battery case is increased, or a two-cup forming method in which the volume of a cup part is increased by forming the cup part on each of the upper and lower cases is being attempted.

In the conventional pouch film laminate manufacturing, in order to prevent adhesion between pouch films and facilitate post-processing, a slip agent was included in the sealant layer of the innermost layer of the pouch film, or a slip agent was applied to the surface of the sealant layer. However, there is a problem that the slip agent penetrates into the sealant layer at high temperatures and disappears.

Therefore, there is a demand for the development of a pouch film laminate that may prevent adhesion between pouch film laminates regardless of temperature and facilitate post-processing, while also preventing cracks from occurring even if the depth for forming the cup is increased.

**DISCLOSURE OF THE INVENTION**

**TECHNICAL PROBLEM**

The present invention is intended to solve the above problems, and provides a pouch film laminate, a pouch-type battery case, and a pouch-type secondary battery, that have excellent formability while preventing adhesion between pouch film laminates regardless of temperature and having no significant change in friction coefficient depending on temperature.

The tasks of the present invention are not limited to the tasks mentioned above, and other tasks that are not mentioned may be clearly understood by those skilled in the art from the description below.

**TECHNICAL SOLUTION**

[1] The present invention provides a pouch film laminate comprising sequentially laminated substrate layers, a gas barrier layer, and a sealant layer, wherein the sealant layer has a value of $f_T$ represented by [Equation 1] below of 0.32 to 3.1, and a surface roughness (Ra) of the sealant layer is 0.11 $\mu$m to 0.75 $\mu$m.

[Equation 1]

$$f_T = f_{T2} / f_{T1}$$

In [Equation 1], $f_{T1}$ is a friction coefficient of the sealant layer at T1, $f_{T2}$ is a friction coefficient of the sealant layer at T2, and T1 and T2 are different temperatures.

[2] In the present invention according to [1], the value of $f_T$ may be 0.33 to 3.0.

[3] In the present invention according to [1] or [2], T1 may be 25°C, and T2 may be any temperature between 0°C and 125°C excluding 25°C.

[4] In the present invention according to any one of [1] to [3], T1 may be 25°C, and T2 may be 60°C.

[5] In the present invention according to any one of [1] to [4], the surface roughness (Ra) of the sealant layer may be 0.16 $\mu$m to 0.55 $\mu$m.

[6] In the present invention according to any one of [1] to [5], the sealant layer may comprise a positive protrusion.

[7] In the present invention according to any one of [1] to [6], the friction coefficient of the sealant layer at 60°C may be 0.38 or less.

[8] In the present invention according to any one of [1] to [7], the pouch film laminate may have a $D_T$ value represented by [Equation 2] below of 0.82 to 1.22.

[Equation 2]

$$D_T = D_{T2,a} / D_{T1,a}$$

In [Equation 2], $DT_{1,a}$ is a forming depth at which a crack occurs if the pouch film laminate is cut to a size of 300 mm x 400 mm at T1,a and then formed to have two cup parts each measuring 90 mm x 160 mm in width and length, $D_{T2,a}$ is a forming depth at which a crack occurs if the pouch film laminate is cut to a size of 300 mm x 400 mm at T2,a and then formed to have two cup parts each measuring 90 mm x 160 mm in width and length, and T1,a and T2,a are different temperatures.

[9] In the present invention according to any one of [1] to [8], the substrate layer may be a laminated structure of a polyethylene terephthalate film and a nylon film.

[10] In the present invention according to any one of [1] to [9], a thickness of the gas barrier layer may be 20 $\mu$m to 100 $\mu$m.

[11] In the present invention according to any one of [1] to [10], a thickness of the sealant layer may be 30 $\mu$m to 130 $\mu$m.

[12] The present invention provides a pouch-type battery case manufactured by drawing and forming the pouch film laminate of [1].

[13] The present invention provides a pouch-type secondary battery comprising the battery case of [12].

**ADVANTAGEOUS EFFECTS**

The sealant layer included in the pouch film laminate according to the present invention has a friction coefficient within a certain range regardless of temperature, and also has a surface roughness (Ra) within a certain range, so that even if a slip agent on the surface of the sealant layer penetrates into the sealant layer at a high temperature, the blocking phenomenon in which the pouch film laminates stick to each other is prevented, and at the same time, excellent formability is achieved. In addition, if the pouch film laminate of the present invention is used, a defective forming ratio according to the storage temperature and aging period of the pouch film laminate may be reduced, the pouch film laminate may be shipped without aging after production, and the processability may be improved because temperature control is unnecessary.

## BRIED DESCRIPTION OF DRAWINGS

The drawings attached to this specification illustrate preferred embodiments of the present invention and, together with the contents of the invention described above, serve to better understanding of the technical idea of the present invention, so the present invention is not limited to the features described in the drawings. Meanwhile, the shape, size, scale or ratio of elements in the drawings included in the specification may be exaggerated to emphasize a clearer explanation.

FIG. 1 is a cross-sectional view of a pouch film laminate according to an embodiment of the present invention.

FIG. 2 is an exploded assembly view of a secondary battery according to an embodiment of the present invention.

FIG. 3 is a diagram showing that no pouch breakage occurs when forming a pouch after storing a pouch film laminate manufactured according to Example 1 at 60°C.

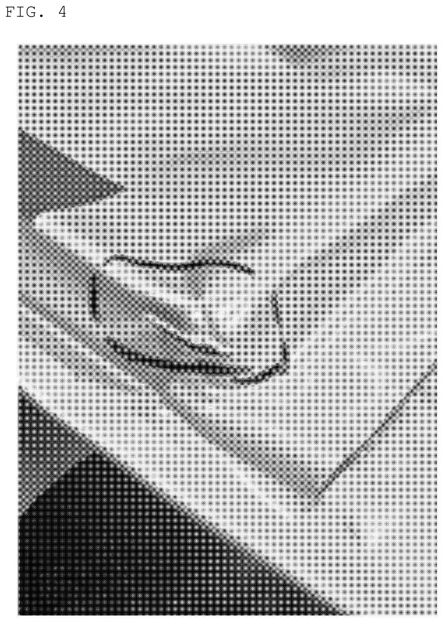

FIG. 4 is a diagram showing that pouch breakage occurs when forming a pouch after storing a pouch film laminate manufactured according to Comparative Example 3 at 60°C.

## BEST MODE FOR CARRYING OUT THE INVENTION

Hereinafter, the present invention will be explained more particularly.

Words or terms used in the present specification and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present invention, a MD direction (Machine Direction) refers to the length direction of the pouch film laminate, and a TD direction (Transverse Direction) refers to the width direction of the pouch film laminate.

In the present invention, a surface roughness (Ra) was measured using an optical measuring device (NV-2700, Optical Profiler of Nano System Co.), and a lens used was Lens i20X, F.O.V 1.0X (F.O.V - 316 $\mu$m x 237 $\mu$m), and the measurement was performed using a WSI envelope mode. Specifically, a scan range was 10 $\mu$m up/down, and a surface roughness was measured for 7 points in each 2D topo image (316 $\mu$m x 237 $\mu$m) measured at an arbitrary point of a sample, and the average and standard deviation were calculated for the values of 5 points excluding the maximum and minimum values.

The present inventors have conducted repeated studies to solve the problems that occur when a slip agent penetrates into the sealant layer at high temperatures and the problems that occur during the process of manufacturing a pouch film laminate through a roll-to-roll process and storing. As a result, the inventors have found that if the ratio of the friction coefficients of the sealant layers in the pouch film laminate at different temperatures is controlled within a certain range while also controlling the surface roughness of the sealant layer within a certain range, excellent formability may be achieved regardless of the temperature, thereby completing the present invention.

Hereinafter, the present invention will be explained particularly.

The pouch film laminate, the pouch-type battery case and the pouch-type secondary battery according to the present invention include at least one of the configurations disclosed below, and may include any combination between technically possible configurations among the configurations below.

### Pouch Film Laminate

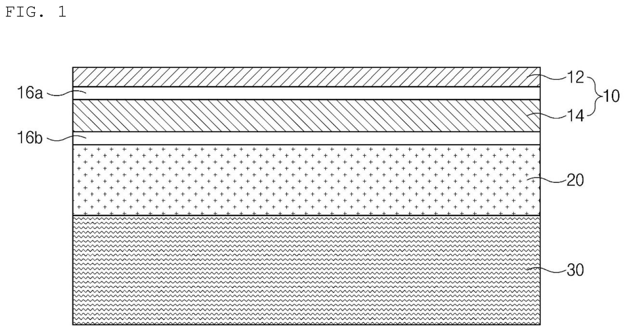

FIG. 1 illustrates an embodiment of a pouch film laminate according to the present invention. Hereinafter, the pouch film laminate according to the present invention will be described with reference to FIG. 1.

Referring to FIG. 1, a pouch film laminate (1) according to the present invention includes a sequentially laminated substrate layer (10), a gas barrier layer (20), and a sealant layer (30), wherein the sealant layer (30) has a value of $f_T$ represented by [Equation 1] below of 0.32 to 3.1, and a surface roughness (Ra) of the sealant layer (30) is 0.11 $\mu$m to 0.75 $\mu$m.

[Equation 1]

$$f_T = f_{T2} / f_{T1}$$

In [Equation 1], $f_{T1}$ is a friction coefficient of the sealant layer at T1, $f_{T2}$ is a friction coefficient of the sealant layer at T2, and T1 and T2 are different temperatures.

In the conventional pouch film laminate manufacturing, in order to prevent adhesion between pouch films and facilitate post-processing, a slip agent is included in the sealant layer of the innermost layer of the pouch film, or a slip agent is applied to the surface of the sealant layer to control the friction coefficient. However, at high temperatures, the slip agent penetrates into the sealant layer and disappears, and the friction coefficient of the sealant layer rapidly increases. In this case, if the friction coefficient increases, cracks occur in the pouch during the forming of the cup part of the pouch-type battery case, which causes a problem in that the forming depth of the cup part may not be increased. In addition, if the slip agent disappears, there is a problem in that a blocking phenomenon occurs in which pouch film laminates stick to each other during a storage process.

Accordingly, the inventors of the present invention have repeatedly developed a pouch film laminate that prevents adhesion between pouch film laminates even at high temperatures, facilitates post-processing, and does not cause cracks even though the forming depth of the cup part is increased. As a result, the inventors have found that if the friction coefficient of the sealant layer is controlled within a certain range at different temperatures and the surface roughness of the sealant layer is controlled within a certain range, excellent formability may be achieved regardless of the temperature, and more specifically, excellent formability may be achieved even at high temperatures.

The value of $f_T$ represented by [Equation 1] above may specifically represent a value of 0.32 or more, 0.322 or more, 0.324 or more, 0.326 or more, 0.328 or more, or 0.33 or more, and may represent a value of 3.1 or less, 3.09 or less, 3.08 or less, 3.07 or less, 3.06 or less, 3.05 or less, 3.04 or less, 3.03 or less, 3.02 or less, 3.01 or less, or 3.0 or less.

In addition, in [Equation 1], T1 and T2 are different temperatures. Preferably, T1 may be 25°C, and T2 may be any temperature between 0°C and 125°C except 25°C, more preferably, T1 may be 25°C, and T2 may be any temperature between 40°C and 125°C, even more preferably, T1 may be 25°C, and T2 may be any temperature between 50°C and 125°C, and even more preferably, T1 may be 25°C, and T2 may be 60°C.

If the value of $f_T$ is less than 0.32 or greater than 3.1, there is a problem that the friction coefficient of the sealant layer is greatly different at different temperatures, so that the formability deteriorates depending on the temperature, and a blocking phenomenon occurs in which the pouch film laminates adhere to each other, so that there is a problem in the processability. Therefore, if the value of $f_T$ satisfies the above range, the friction coefficient of the sealant layer may be appropriately controlled at different temperatures, so that the formability may be excellent regardless of the temperature, and the processability may be excellent because there is no need to control the temperature.

Preferably, the sealant layer (30) may have an $f_{60,25}$ value represented by [Equation 1-1] below of 1.00 to 3.15, specifically 1.5 to 3.1, more specifically 1.80 to 3.05, and more specifically 2.0 to 3.0.

$$[\text{Equation 1-1}]$$

$$f_{60,25} = f_{60°C} / f_{25°C}$$

In [Equation 1-1], $f_{60°C}$ is the friction coefficient of the sealant layer at 60°C, and $f_{25°C}$ is the friction coefficient of the sealant layer at 25°C.

The $f_T$ may be controlled in various ways, such as by controlling the amount of the slip agent included in the sealant layer, the melting point of the slip agent, the mixing ratio of the slip agent, or the surface roughness (Ra) of the sealant layer. Preferably, the $f_T$ value may be controlled to an appropriate range by controlling the surface roughness (Ra) of the sealant layer.

In addition, the surface roughness (Ra) of the sealant layer (30) is 0.11 $\mu$m to 0.75 $\mu$m, preferably 0.12 $\mu$m to 0.72 $\mu$m, more preferably 0.13 $\mu$m to 0.70 $\mu$m, even more preferably 0.14 $\mu$m to 0.65 $\mu$m, even more preferably 0.15 $\mu$m to 0.60 $\mu$m, and even more preferably 0.16 $\mu$m to 0.55 $\mu$m.

In the case where a roll-to-roll process is applied for mass and high-speed production of a pouch film laminate, in a stage prior to forming a pouch-type case after producing the pouch film laminate, the pouch film laminate is stored in a roll shape in which a long rectangular parallelepiped is wound in one direction. In this case, the sealant layer (30) located at the lowest part of the pouch film laminate shows a roll shape in contact with the substrate layer (10) due to the wound shape.

In this case, if the surface roughness (Ra) of the sealant layer (30) is less than 0.11 $\mu$m, the contact area with the substrate layer may increase due to the low surface roughness, and as a result, the slip agent on the surface of the sealant layer (30) may be transferred to the surface of the substrate layer, so that the slip agent on the surface of the sealant layer (30) may be further reduced. In addition, if stored at high temperatures as well as at room temperature, the solubility of the slip agent on the surface of the sealant layer (30) may increase, so that a larger amount of the slip agent may be transferred to the surface of the substrate layer, and therefore, the friction coefficient may increase at room temperature, and the friction coefficient may change greatly depending on the temperature, so that there is a disadvantage in that the friction coefficient fluctuation may increase depending on the temperature change. In this case, there is a disadvantage in that the maximum forming depth may decrease depending on the temperature change, and the maximum forming depth decreases depending on the storage and/or transport method of the pouch film laminate.

In addition, if the surface roughness (Ra) of the sealant layer (30) is greater than 0.75 $\mu$m, the contact area with the substrate layer may decrease due to the high surface roughness, and thus, the amount of the slip agent on the surface of the sealant layer (30) transferred to the surface of the substrate layer (10) may decrease. Meanwhile, if forming a pouch-type case, a sealant layer (30) may be in contact with one end of a jig, and a substrate layer (10) may be in contact with a portion opposite to the one end. However, as described above, the amount of the slip agent transferred to the surface of the substrate layer (10) may decrease, so that the friction coefficient of the substrate layer (10) may increase, and thus, there is a problem that the maximum forming depth may decrease. In addition, if the surface roughness is excessively high, the friction coefficient may increase due to an anchor effect, so there is a problem that the formability may decrease. In this case, the maximum forming depth may decrease depending on temperature changes, and there is a disadvantage that the maximum forming depth decreases depending on the storage and/or transport method of the pouch film laminate.

Therefore, if the above range is satisfied, the phenomenon of sticking that repeatedly occurs when two surfaces are bonded and the bonding points are instantaneously created and broken during sliding, does not occur, so an appropriate friction coefficient may be maintained, thereby enabling excellent formability, and the degree of unevenness is not excessive, so that the formability does not deteriorate regardless of the temperature. If a roll-to-roll process is performed, the amount of the slip agent present on the surface of the sealant layer (30) and the substrate layer (10) may be appropriately controlled to achieve excellent formability, while also providing excellent insulation and sealing properties.

The sealant layer (30) may include a positive protrusion or a negative protrusion, and preferably, it may be a positive protrusion. In the case of a positive protrusion, particles having different average particle diameters may be added to the surface layer of the sealant layer to form a positive protrusion, so that the processability may be excellent in that the surface roughness may be easily controlled.

The sealant layer (30) may have a friction coefficient of 0.20 or less at 25°C, preferably 0.01 to 0.15, more preferably 0.01 to 0.13, even more preferably 0.01 to 0.12, and even more preferably 0.02 to 0.11. If the range is satisfied, the friction coefficient of the sealant layer is sufficiently low even at room temperature, so that the formability may be excellent, and the blocking phenomenon in which the pouch film laminates stick to each other may be prevented, while the friction coefficient of the sealant layer according to temperature change is not large, so that the formability and processability may be excellent.

The sealant layer (30) may have a friction coefficient of 0.38 or less at 60°C, preferably 0.01 to 0.35, more preferably 0.05 to 0.33, and even more preferably 0.05 to 0.30. If the range is satisfied, the friction coefficient of the sealant layer is sufficiently low even at high temperatures, so that the formability may be excellent, and the blocking phenomenon in which the pouch film laminates stick to each other may be prevented, while the friction coefficient of the sealant layer according to temperature change is not large, so that the formability and processability may be excellent.

The sealant layer (30) may include a slip agent. The slip agent may be any one that may impart slipperiness, and is not particularly limited, but may be, for example, erucamide. If the slip agent is included, whitening phenomenon that appears in the sealant layer may be prevented, and contamination that occurs during the forming process may be prevented.

The sealant layer (30) may not include a slip agent layer formed by applying a slip agent. Conventionally, a process of applying a slip agent could be added to increase formability or maintain slipperiness, but since the sealant layer according to the present invention may exhibit excellent slipperiness and formability even without including the slip agent layer, the slip agent layer may not be included. Accordingly, the processability may be improved because there is no additional process of applying a slip agent, and contamination that occurs during the forming process may be prevented.

Meanwhile, the pouch film laminate may have a value of $D_T$ represented by [Equation 2] below of 0.82 to 1.22, preferably 0.85 to 1.2, more preferably 0.9 to 1.1, and even more preferably 0.94 to 1.06.

$$[\text{Equation 2}]$$

$$D_T = D_{T2,a} / D_{T1,a}$$

In [Equation 2], $DT_{1,a}$ is a forming depth at which a crack occurs if the pouch film laminate is cut to a size of 300 mm x 400 mm at T1,a and then formed to have two cup parts each measuring 90 mm x 160 mm in width and length, $D_{T2,a}$ is a forming depth at which a crack occurs if the pouch film laminate is cut to a size of 300 mm x 400 mm at T2,a and then formed to have two cup parts each measuring 90 mm x 160 mm in width and length, and T1,a and T2,a are different temperatures.

In this case, T1,a may be 25°C, and T2,a may be any temperature between 0°C and 125°C except 25°C, more preferably, T1,a may be 25°C, and T2,a may be any temperature between 40°C and 125°C, even more preferably, T1,a may be 25°C, and T2,a may be any temperature between 50°C and 125°C, and even more preferably, T1,a may be 25°C, and T2,a may be 60°C.

Hereinafter, each layer of the pouch film laminate according to the present invention will be described in detail.

**(Substrate Layer)**

The substrate layer (10) is disposed on the outermost layer of the battery case to protect the electrode assembly from external impact and electrically insulate the same.

According to an embodiment, the substrate layer (10) may have a laminated structure of a polyethylene terephthalate (PET) film and a nylon film. In this case, it is preferable that the nylon film is disposed on the gas barrier layer (20) side, that is, on the inside, and the polyethylene terephthalate film is disposed on the surface side of the battery case.

Polyethylene terephthalate (PET) has excellent durability and electrical insulation properties, so if the PET film is disposed on the surface side, durability and insulation properties are excellent. However, in the case of the PET film, since the adhesion to an aluminum alloy thin film constituting the gas barrier layer (20) is weak and a stretching behavior is also different, if the PET film is placed on the gas barrier layer side, the substrate layer and the gas barrier layer may be separated during a forming process, and the gas barrier layer may not be stretched uniformly, which may cause a problem of deteriorated formability. In contrast, since the nylon film has a similar stretching behavior to the aluminum alloy thin film constituting the gas barrier layer (20), if the nylon film is placed between the polyethylene terephthalate and the gas barrier layer, an effect of improved formability may be obtained.

The polyethylene terephthalate film may have a thickness of 5 $\mu$m to 20 $\mu$m, preferably 5 $\mu$m to 15 $\mu$m, more preferably 7 $\mu$m to 15 $\mu$m, and the nylon film may have a thickness of 20 $\mu$m to 40 $\mu$m, preferably 20 $\mu$m to 35 $\mu$m, more preferably 25 $\mu$m to 35 $\mu$m. If the thicknesses of the polyethylene terephthalate film and the nylon film satisfy the above ranges, the formability and the rigidity after forming are excellent.

**(Gas barrier layer)**

The gas barrier layer (20) is laminated between the substrate layer (10) and the sealant layer (30) to secure the mechanical strength of the pouch, block the entry and exit of gas or moisture from the outside of the secondary battery, and prevent electrolyte leakage from the inside of the pouch-type battery case.

The gas barrier layer (20) may be formed of a metal. For example, the gas barrier layer may be a metal thin film including one or more metals selected from the group consisting of aluminum (Al), copper (Cu), stainless steel (SUS), nickel (Ni), titanium (Ti), and Invar, but is not limited thereto.

According to an embodiment of the present invention, the gas barrier layer (20) may be formed of an aluminum alloy thin film. If forming the gas barrier layer (20) using an aluminum alloy thin film, it is possible to secure mechanical strength above a predetermined level, while being light in weight, and to secure complementary properties for electrochemical properties by the electrode assembly and electrolyte, as well as heat dissipation, or the like. The aluminum alloy thin film may contain elements other than aluminum (Al). For example, the aluminum alloy thin film may contain one or more selected from the group consisting of iron (Fe), copper (Cu), chromium (Cr), manganese (Mn), nickel (Ni), magnesium (Mg), silicon (Si), and zinc (Zn).

In another embodiment, the gas barrier layer (20) may be formed of a stainless steel thin film. Specifically, the gas barrier layer (20) may be manufactured by forming and/or processing a stainless steel thin film. The gas barrier layer (20) formed of stainless steel has relatively low thermal conductivity, which is effective in preventing or delaying heat diffusion to other cells during thermal runaway, and has relatively high toughness, which may suppress cracking of the pouch during the use of the pouch-type battery. The stainless steel may include one or more elements other than iron (Fe), such as copper (Cu), chromium (Cr), manganese (Mn), nickel (Ni), magnesium (Mg), silicon (Si), and zinc (Zn).

The thickness of the gas barrier layer (20) may be 20 $\mu$m to 100 $\mu$m, preferably 30 $\mu$m to 90 $\mu$m, and more preferably 40 $\mu$m to 85 $\mu$m. The present invention does not cause a problem of deformation of the substrate layer even though the sealing temperature is increased so that heat may be transferred to the sealant layer, so that the formability and gas barrier performance may be improved when forming a cup part by using a gas barrier layer thicker than the conventional gas barrier layer.

**(Sealant Layer)**

The sealant layer (30) is to completely seal the inside of the pouch-type battery case by mutually thermally bonding at a sealing part during sealing the pouch-type battery case containing the electrode assembly inside. For this, the sealant layer (30) may be formed of a material having excellent thermal bonding strength.

The sealant layer (30) may be formed of a material having insulation, corrosion resistance, and sealing properties. Specifically, since the sealant layer (30) is in direct contact with the electrode assembly and/or electrolyte inside the pouch-type battery case, it may be formed of a material having insulation and corrosion resistance. In addition, since the sealant layer (30) is required to completely insulate the inside of the pouch-type battery case and block material movement between the inside and the outside, the sealant layer (30) may be formed of a material having high sealing properties (e.g., excellent thermal bonding strength). In order to secure such insulation, corrosion resistance, and sealing properties, the sealant layer (30) may be formed of a polymer material.

The sealant layer (30) may be made of one or more materials selected from the group consisting of polyethylene, polypropylene, polycarbonate, polyethylene terephthalate, polyvinyl chloride, an acrylic polymer, polyacrylonitrile, polyimide, polyamide, cellulose, nylon, polyester, polyparaphenylene benzobisoxazole, polyarylate, and Teflon, and may preferably be formed of a polyolefin resin such as polypropylene (PP) and/or polyethylene (PE). In this case, the polypropylene may be composed of cast polypropylene (CPP), acid modified polypropylene (PPa), a polypropylene-ethylene copolymer, and/or a polypropylene-butylene-ethylene terpolymer.

The thickness of the sealant layer (30) may be 30 μm to 130 μm, preferably 40 μm to 120 μm, and more preferably 60 μm to 100 μm. If the thickness of the sealant layer satisfies the above range, there is an effect of securing the sealing strength of the sealing part while securing the formability of the pouch film laminate.

Meanwhile, the sealant layer (30) according to the present invention may have a composite film structure in which two or more materials form layers, respectively. For example, the sealant layer (30) may have a multilayer structure. An adhesive layer and/or a skin layer may be disposed between each layer of the sealant layer (30) having the composite film structure. The adhesive layer and/or the skin layer may have thermal adhesiveness and thus may play a role in assisting the adhesion between each layer of the sealant layer (30). For example, the adhesive layer and/or the skin layer may include a polypropylene-based resin, but is not limited thereto. In addition, the adhesive layer and/or skin layer may be disposed between the sealant layer (30) and the gas barrier layer (20).

The pouch film laminate of the present invention as described above may be manufactured through a manufacturing method of a pouch film laminate known in the art. For example, the pouch film laminate of the present invention may be manufactured through a method of attaching the substrate layer (10) to the upper surface of the gas barrier layer (20) through an adhesive, and forming the sealant layer (30) on the lower surface of the gas barrier layer (20) through coextrusion or an adhesive layer, and may be manufactured through a method such as dry lamination, and sandwich lamination. However, the manufacturing method of the pouch film laminate is not limited thereto.

The pouch film laminate according to the present invention may have a total thickness of 120 μm to 300 μm, specifically 130 μm to 280 μm, and more preferably 140 μm to 250 μm. If the thickness of the pouch film laminate satisfies the above range, the forming depth may be increased while minimizing the decrease in battery accommodation space and the deterioration of sealing durability due to the increase in the thickness of the pouch laminate.

**Pouch-type Secondary Battery**

Next, the pouch-type secondary battery according to the present invention will be described.

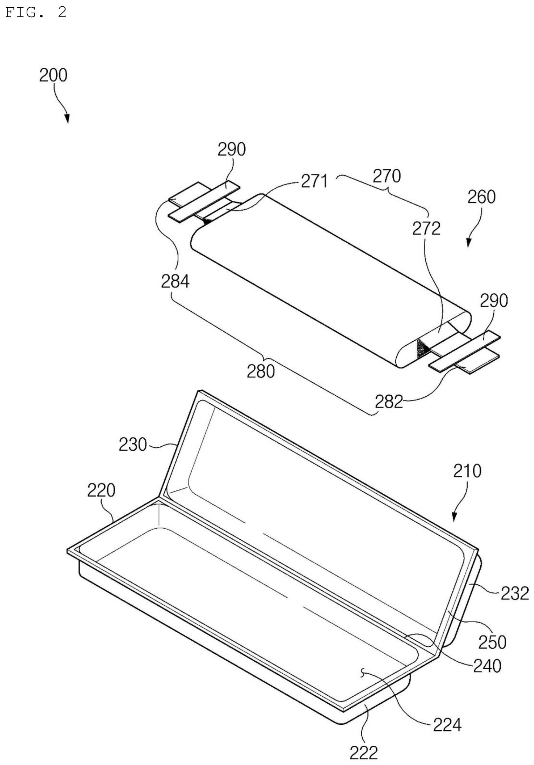

FIG. 2 is an exploded assembly diagram of a pouch-type secondary battery (200) according to the present invention.

As shown in FIG. 2, the pouch-type secondary battery (200) according to the present invention may include a pouch-type battery case (210) manufactured by forming the aforementioned pouch film laminate, and an electrode assembly (260) accommodated in the pouch-type battery case (210). Specifically, the pouch-type secondary battery (200) of the present invention may include a pouch-type battery case (210), an electrode assembly (260), an electrode lead (280), an insulating part (290), and an electrolyte (not shown).

Hereinafter, each configuration of the pouch-type secondary battery of the present invention will be described in more detail with reference to FIG. 2.

**(Pouch-type Battery Case)**

A pouch-type battery case (210) may be manufactured by forming the aforementioned pouch film laminate of the present invention. The pouch-type battery case (210) may accommodate an electrode assembly (260) inside. Since the detailed configuration and properties of the pouch film laminate are the same as those described above, the detailed description thereof will be omitted.

The pouch film laminate may be formed by drawing and stretched by a punch or the like to manufacture the pouch-type battery case (210). As a result, the pouch-type battery case (210) may include a cup part (222) and a receiving part (224). The receiving part (224) is a place for accommodating the electrode assembly, and may mean a receiving space formed in the form of a pocket on the inside of the cup part (222) as the cup part (222) is formed.

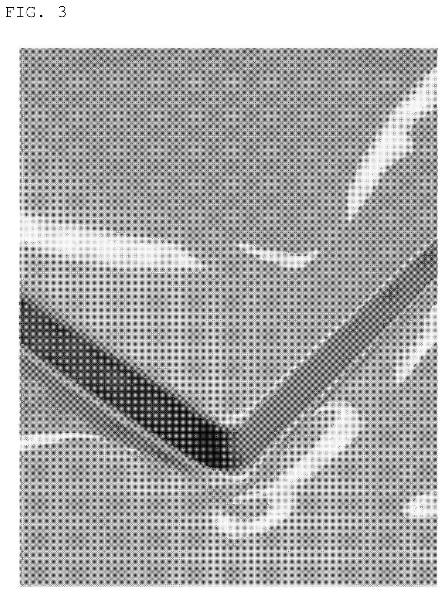

According to an embodiment of the present invention, the pouch-type battery case (210) may include a first case (220) and a second case (230) as illustrated in FIG. 3. The first case (220) includes a receiving part (224) that may receive an electrode assembly (260), and the second case (230) may cover the receiving part (224) from above so that the electrode assembly (260) does not fall out of the battery case (210). The first case (220) and the second case (230) may be manufactured with one side connected to each other as shown in FIG. 3, but are not limited thereto and may be manufactured in various ways, such as being manufactured separately by being separated from each other.

According to another embodiment of the present invention, if forming a cup part in a pouch film laminate, two symmetrical cup parts (222, 232) may be drawn and formed adjacent to each other in one pouch film laminate. In this case, cup parts (222, 232) may be formed in each of the first case (220) and the second case (230) as illustrated in FIG. 3. After the electrode assembly (260) is accommodated in the receiving part (224) provided in the cup part (222) of the first case (220), a bridge part (240) formed between the two cup parts (222, 232) may be folded so that the two cup parts (222, 232) face each other. In this case, the cup part (232) of the second case (230) may accommodate the electrode assembly (260) from above. Accordingly, since two cup parts (222, 232) accommodate one electrode assembly (260), an electrode assembly (260) having a thicker thickness may be accommodated than a case where only one cup part (222) is provided. In addition, since one corner of the secondary battery (200) is formed by folding the pouch-type battery case (210), the number of corners to be sealed may be reduced during performing a sealing process later. Accordingly, the process speed of the pouch-type secondary battery (200) may be improved, and the number of sealing processes may be reduced.

The pouch-type battery case (210) may be sealed in a state where the electrode assembly (260) is accommodated such that a part of an electrode lead (280) described later, that is, a terminal part, is exposed. Specifically, if the electrode lead (280) is connected to the electrode tab (270) of the electrode assembly (260) and an insulating part (290) is formed on a portion of the electrode lead (280), the electrode assembly (260) is accommodated in the receiving part (224) provided in the cup part (222) of the first case (220), and the second case (230) may cover the receiving part (224) from above. Then, an electrolyte is injected into the interior of the receiving part (224), and the sealing part (250) formed on the edges of the first case (220) and the second case (230) may be sealed.

The sealing part (250) may play the role of sealing the receiving part (224). Specifically, the sealing part (250) may seal the receiving part (224) while being formed along the edge of the receiving part (224). The temperature for sealing the sealing part (250) may be 180°C to 250°C, specifically 200°C to 250°C, and more specifically 210°C to 240°C. If the sealing temperature satisfies the above numerical range, the pouch-type battery case (210) may secure sufficient sealing strength by heat bonding.

**(Electrode Assembly)**

The electrode assembly (260) may be inserted into the pouch-type battery case (210) and sealed by the pouch-type battery case (210) after injecting an electrolyte.

The electrode assembly (260) may be formed by sequentially laminating a positive electrode, a separator, and a negative electrode. Specifically, the electrode assembly (260) may include two types of electrodes, a positive electrode and a negative electrode, and a separator interposed between the electrodes to mutually insulate the electrodes.

The positive electrode and the negative electrode may each have a structure in which an active material slurry is applied to an electrode current collector in the form of a metal foil or metal mesh containing aluminum and copper. The slurry may be formed by stirring a granular active material, an auxiliary conductor, a binder, and a conductive material while a solvent is added. The solvent may be removed in a subsequent process.

By applying a slurry containing an electrode active material and a binder and/or a conductive material to a positive electrode current collector and a negative electrode current collector to manufacture a positive electrode and a negative electrode, and laminating them on both sides of a separator, an electrode assembly (260) may be manufactured in a predetermined shape. The type of the electrode assembly (260) may include, but is not limited to, a stack type, a jelly roll type, a stack and folding type, or the like.

The electrode assembly (260) may include an electrode tab (270).

The electrode tab (270) is connected to the positive and negative electrodes of the electrode assembly (260), respectively, and protrudes outward from the electrode assembly (260) to serve as a path through which electrons may move between the inside and the outside of the electrode assembly (260). The electrode current collector included in the electrode assembly (260) may be composed of a part where the electrode active material is applied and a terminal part where the electrode active material is not applied, i.e., a non-coated part. The electrode tab (270) may be formed by cutting the non-coated part or by connecting a separate conductive member to the non-coated part by ultrasonic welding, or the like. As shown in FIG. 2, the electrode tab (270) may protrude in different directions from the electrode assembly (260), but is not limited thereto, and may be formed to protrude in various directions, such as protruding in parallel in the same direction from one side.

**(Electrode Lead)**

The electrode lead (280) may supply electricity to the outside of the secondary battery (200). The electrode lead (280) may be connected to the electrode tab (270) of the electrode assembly (260) by spot welding, or the like.

The electrode lead (280) may be connected to the electrode assembly (260) and may protrude to the outside of the pouch-type battery case (210) via the sealing part (250). Specifically, one end of the electrode lead (280) is connected to the electrode assembly (260), particularly the electrode tab (270), and the other end of the electrode lead (280) may protrude to the outside of the pouch-type battery case (210).

The electrode lead (280) may include a positive lead (282) having one end connected to the positive tab (272) and extending in the direction in which the positive tab (272) protrudes, and a negative lead (284) having one end connected to the negative tab (274) and extending in the direction in which the negative tab (274) protrudes. The other ends of both the positive lead (282) and the negative lead (284) may protrude to the outside of the battery case (210). Therefore, electricity generated inside the electrode assembly (260) may be supplied to the outside. In addition, since the positive tab (272) and the negative tab (274) are formed to protrude in various directions, the positive lead (282) and the negative lead (284) may also extend in various directions, respectively. The positive lead (282) and the negative lead (284) may have different materials. That is, the positive lead (282) may be made of the same aluminum (Al) material as the positive electrode current collector, and the negative lead (284) may be made of the same copper (Cu) material as the negative electrode current collector or copper material coated with nickel (Ni). A portion of the electrode lead (280) protruding outside the battery case (210) may be a terminal part and be electrically connected to an external terminal.

**(Insulating Part)**

The insulating part (290) prevents electricity generated from the electrode assembly (260) from flowing to the battery case (210) through the electrode lead (280) and maintains the sealing of the battery case (210). For this, the insulating part (290) may be formed of a non-conductive material that does not conduct electricity well. In general, the insulating part (290) is often made of an insulating tape or film that is easy to attach to the electrode lead (280) and has a relatively small thickness, but is not limited thereto, and any material that may insulate the electrode lead (280) may be used.

The insulating part (290) may be positioned to surround the outer surface of the electrode lead (280). Specifically, at least a portion of the electrode lead (280) may be surrounded by the insulating part (290). In this case, the insulating part (290) may be positioned between the electrode lead (280) and the pouch-type battery case (210). The insulation part (290) may be positioned limited to the sealing part (250) where the first case (220) and the second case (230) of the pouch-type battery case (210) are thermally fused, and the electrode lead (280) may be attached to the battery case (210).

**(Electrolyte)**

The pouch-type secondary battery (200) according to the present invention may further include an electrolyte (not shown) that is injected inside the pouch-type battery case (210). The electrolyte is for moving lithium ions generated by the electrochemical reaction of the electrode during charging/discharging of the secondary battery (200), and may include a non-aqueous organic electrolyte that is a mixture of a lithium salt and an organic solvent, or a polymer using a polymer electrolyte. Furthermore, the electrolyte may include a solid electrolyte of a sulfide type, an oxide type, or a polymer type, and such a solid electrolyte may have flexibility that is easily deformed by an external force.

Hereinafter, the present invention will be described in more detail through specific examples. However, the examples are only examples to help the understanding of the present invention, and do not limit the scope of the present invention. It is obvious to those skilled in the art that various changes and modifications are possible within the scope and technical idea of the present disclosure, and it is natural that such changes and modifications fall within the scope of the appended claims.

### Examples and Comparative Examples

**Example 1: Manufacture of Pouch Film Laminate**

A sealant layer was manufactured by adding polypropylene (PP) particles having a particle diameter of 10 $\mu$m to form surface roughness on the surface of a polypropylene (PP) film having a width of 400 mm, a length of 50 m, and a thickness of 80 $\mu$m.

Thereafter, a second adhesive film, a nylon film having a thickness of 15 $\mu$m, a first adhesive film, and a polyethylene terephthalate (PET) film having a thickness of 12 $\mu$m were sequentially laminated on one side of an aluminum alloy film having a thickness of 40 $\mu$m, and the manufactured sealant layer was sequentially laminated on the other side of the aluminum alloy film. As a result, a pouch film laminate having a structure in which the manufactured sealant layer / aluminum alloy film / second adhesive film / nylon film / first adhesive film / polyethylene terephthalate film were sequentially laminated, was manufactured.

**Example 2: Manufacture of Pouch Film Laminate**

A pouch film laminate was manufactured in the same manner as in Example 1, except that a sealant layer was manufactured by adding polypropylene (PP) particles having a particle diameter of 15 $\mu$m to the surface layer to form surface roughness.

### Example 3: Manufacture of Pouch Film Laminate

A pouch film laminate was manufactured in the same manner as in Example 1, except that a sealant layer was manufactured by adding polypropylene (PP) particles having a particle diameter of 20 $\mu$m to the surface layer to form surface roughness.

### Example 4: Manufacture of Pouch Film Laminate

A pouch film laminate was manufactured in the same manner as in Example 1, except that a sealant layer was manufactured by adding polypropylene (PP) particles having a particle diameter of 25 $\mu$m to the surface layer to form surface roughness.

### Comparative Example 1: Manufacture of Pouch Film Laminate

A pouch film laminate was manufactured in the same manner as in Example 1, except that a sealant layer was manufactured by adding Si particles having a particle diameter of 1 $\mu$m to the surface layer to form surface roughness.

### Comparative Example 2: Manufacture of Pouch Film Laminate

A pouch film laminate was manufactured in the same manner as in Example 1, except that a sealant layer was manufactured by adding Si particles having a particle diameter of 3 $\mu$m to the surface layer to form surface roughness.

### Comparative Example 3: Manufacture of Pouch Film Laminate

A pouch film laminate was manufactured in the same manner as in Example 1, except that a sealant layer was manufactured by adding Si particles having a particle diameter of 5 $\mu$m to the surface layer to form surface roughness.

### Comparative Example 4: Manufacture of Pouch Film Laminate

A pouch film laminate was manufactured in the same manner as in Example 1, except that a sealant layer was manufactured by adding Si particles having a particle diameter of 50 $\mu$m to the surface layer to form surface roughness.

### Experimental Example 1: Surface Roughness Measurement

The surface roughness of the sealant layer in each of the pouch film laminates manufactured according to Examples 1 to 4 and Comparative Examples 1 to 4 was measured using an optical measuring device (NV-2700, Optical Profiler, Nano System Co.).

The measured surface roughness (Ra) is listed in [Table 1] below.

[Table 1]

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Surface roughness (Ra, μm) | 0.161 | 0.298 | 0.340 | 0.521 | 0.050 | 0.070 | 0.100 | 0.756 |

## Experimental Example 2: Measurement of Friction Coefficient According to Temperature

Each of the pouch film laminates manufactured according to Examples 1 to 4 and Comparative Examples 1 to 4 was stored at 25°C and 60°C for 6 hours, respectively, and then the friction coefficient was measured.

As a method for measuring the friction coefficient, a sled metal having a size of 130 mm (MD direction) x 65 mm (TD direction) and a weight of 200 g was brought into contact with the sealant layer of the pouch film laminate having a size of 500 mm (MD direction) x 400 mm (TD direction), and the measurement was made.

In detail, the sled metal was moved 100 mm over the sealant layer at a speed of 100 mm/min, and the friction coefficient was measured by taking the average value of the kinetic friction coefficients measured 5 times in the 20 mm to 80 mm section.

The friction coefficients measured for the pouch film laminates stored at 25°C and 60°C for 6 hours, respectively, are shown in [Table 2] below.

[Table 2]

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Friction coefficient | 25°C | 0.10 | 0.10 | 0.10 | 0.11 | 0.15 | 0.19 | 0.15 | 0.12 |
| | 60°C | 0.20 | 0.20 | 0.30 | 0.30 | 0.70 | 0.60 | 0.80 | 0.40 |
| $f_{60°C}/f_{25°C}$ | | 2.0 | 2.0 | 3.0 | 2.7 | 4.7 | 3.2 | 5.3 | 3.3 |

As described in [Table 2] above, it can be seen that Comparative Examples 1 to 4, in which the surface roughness of the sealant layer was formed too low or too high, had a higher ratio of the friction coefficient at 60°C to the friction coefficient at 25°C than Examples 1 to 4.

**Experimental Example 3: Pouch Film Laminate Formability Evaluation According to Temperature**

Each of the pouch film laminates manufactured according to Examples 1 to 4 and Comparative Examples 1 to 4 was stored at 25°C and 60°C for 6 hours, respectively, and then the formability of the pouch film laminate was evaluated.
As a method for evaluating the formability of the pouch film laminate, each of the pouch film laminates was cut to the same size of 300 mm (MD direction) x 400 mm (TD direction), and then the forming depth was varied in a battery case forming device having two forming parts of 90 mm (MD direction) x 160 mm (TD direction) in size, and the forming depth when cracks occurred was recorded. Here, the punch and the forming part of the battery case forming device were filleted at the corners and edges, and the punch had a curvature of 2 mm at the corners and 0.5 mm at the edges, and the forming part had a curvature of 2.0 mm at the corners and 1 mm at the edges. In addition, the clearance between the punch and the forming part was 0.5 mm.
The measured forming depths for the pouch film laminates stored at 25°C and 60°C for 6 hours each are shown in [Table 3] below.

[Table 3]

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| 2 cup forming depth (mm) | 25°C | 8.0 | 8.0 | 8.0 | 8.0 | 8.0 | 8.0 | 8.0 | 8.0 |
| | 60°C | 8.0 | 7.5 | 8.0 | 8.0 | 6.0 | 6.0 | 6.5 | 6.5 |
| $D_{60°C}/D_{25°C}$ | | 1.0 | 0.94 | 1.0 | 1.0 | 0.75 | 0.75 | 0.81 | 0.81 |

As described in [Table 3] above, in the case of Examples 1 to 4, unlike Comparative Examples 1 to 4, there is no significant change in the cup forming depth depending on the temperature, and it can be found that excellent forming depth is exhibited even though using a pouch film laminate stored at a high temperature.

[Explanation of Symbols]

1: Pouch film laminate
10: Substrate layer
20: Gas barrier layer
30: Sealant layer
200: Pouch-type secondary battery
210: Pouch-type case
220: First case
222: Cup part
224: Receiving part
230: Second case
232: Cup part
240: Bridge part
250: Sealing part
260: Electrode assembly
270: Electrode tab
272: Positive tab
274: Negative tab
280: Electrode lead
282: Positive lead
284: Negative lead
290: Insulating part

**Claims**

1.  A pouch film laminate comprising sequentially laminated substrate layers, a gas barrier layer, and a sealant layer,

    wherein the sealant layer has a value of $f_T$ represented by the following [Equation 1] of 0.32 to 3.1, and a surface roughness (Ra) of the sealant layer is 0.11 $\mu$m to 0.75 $\mu$m:

$$[Equation\ 1]$$

$$f_T = f_{T2} / f_{T1}$$

    in [Equation 1], $f_{T1}$ is a friction coefficient of the sealant layer at T1, $f_{T2}$ is a friction coefficient of the sealant layer at T2, and T1 and T2 are different temperatures.

2.  The pouch film laminate according to claim 1, wherein the value of $f_T$ is 0.33 to 3.0.

3.  The pouch film laminate according to claim 1, wherein T1 is 25°C, and T2 is any temperature between 0°C and 125°C excluding 25°C.

4.  The pouch film laminate according to claim 1, wherein T1 is 25°C, and T2 is 60°C.

5.  The pouch film laminate according to claim 1, wherein the surface roughness (Ra) of the sealant layer is 0.16 $\mu$m to 0.55 $\mu$m.

6.  The pouch film laminate according to claim 1, wherein the sealant layer comprises a positive protrusion.

7.  The pouch film laminate according to claim 1, wherein the friction coefficient of the sealant layer at 60°C is 0.38 or less.

8. The pouch film laminate according to claim 1, wherein the pouch film laminate has a $D_T$ value represented by the following [Equation 2] of 0.82 to 1.22:

$$[\text{Equation 2}]$$

$$D_T = D_{T2,a} / D_{T1,a}$$

in [Equation 2], $DT_{1,a}$ is a forming depth at which a crack occurs if the pouch film laminate is cut to a size of 300 mm x 400 mm at T1,a and then formed to have two cup parts each measuring 90 mm x 160 mm in width and length, $D_{T2,a}$ is a forming depth at which a crack occurs if the pouch film laminate is cut to a size of 300 mm x 400 mm at T2,a and then formed to have two cup parts each measuring 90 mm x 160 mm in width and length, and T1,a and T2,a are different temperatures.

9. The pouch film laminate according to claim 1, wherein the substrate layer is a laminated structure of a polyethylene terephthalate film and a nylon film.

10. The pouch film laminate according to claim 1, wherein a thickness of the gas barrier layer is 20 $\mu$m to 100 $\mu$m.

11. The pouch film laminate according to claim 1, wherein a thickness of the sealant layer is 30 $\mu$m to 130 $\mu$m.

12. A pouch-type battery case manufactured by drawing and forming the pouch film laminate of claim 1.

13. A pouch-type secondary battery comprising the battery case of claim 12.

FIG. 1

FIG. 2

FIG. 3

FIG. 4

# EP 4 746 138 A1

## INTERNATIONAL SEARCH REPORT

| | International application No. |
|---|---|
| | **PCT/KR2024/013769** |

### A. CLASSIFICATION OF SUBJECT MATTER

**H01M 50/131**(2021.01)i; **H01M 50/126**(2021.01)i; **H01M 50/133**(2021.01)i; **H01M 50/105**(2021.01)i

According to International Patent Classification (IPC) or to both national classification and IPC

### B. FIELDS SEARCHED

Minimum documentation searched (classification system followed by classification symbols)

H01M 50/131(2021.01); B32B 15/08(2006.01); H01M 10/04(2006.01); H01M 50/105(2021.01); H01M 50/119(2021.01); H01M 50/124(2021.01); H01M 50/129(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 파우치 필름 적층체(pouch-type film laminate), 가스 배리어층(gas barrier layer), 실런트층(sealant layer), 마찰계수(friction coefficient), 표면조도(surface roughness)

### C. DOCUMENTS CONSIDERED TO BE RELEVANT

| Category* | Citation of document, with indication, where appropriate, of the relevant passages | Relevant to claim No. |
|---|---|---|
| X | KR 10-2023-0062515 A (RESONAC PACKAGING CORPORATION) 09 May 2023 (2023-05-09) See paragraphs [0037], [0051], [0083], [0093], [0095], [0102]-[0103], [0111], [0113], [0175] and [0183]-[0186]; table 1; and figures 1-2 and 4-5. | 1-13 |
| A | KR 10-2023-0074057 A (SBTL ADVANCED MATERIALS CO., LTD.) 26 May 2023 (2023-05-26) See entire document. | 1-13 |
| A | KR 10-2023-0068802 A (LOTTE CHEMICAL CORPORATION) 18 May 2023 (2023-05-18) See entire document. | 1-13 |
| A | KR 10-2022-0112213 A (SBTL ADVANCED MATERIALS CO., LTD.) 10 August 2022 (2022-08-10) See entire document. | 1-13 |
| A | US 2021-0098815 A1 (LG CHEM, LTD.) 01 April 2021 (2021-04-01) See entire document. | 1-13 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 December 2024** | **11 December 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013769**

| Patent document cited in search report | | | Publication date (day/month/year) | Patent family member(s) | | | Publication date (day/month/year) |
|---|---|---|---|---|---|---|---|
| KR | 10-2023-0062515 | A | 09 May 2023 | CN | 108023032 | A | 11 May 2018 |
| | | | | CN | 108023032 | B | 22 February 2022 |
| | | | | CN | 114497834 | A | 13 May 2022 |
| | | | | CN | 208400887 | U | 18 January 2019 |
| | | | | JP | 2018-073649 | A | 10 May 2018 |
| | | | | JP | 6990505 | B2 | 12 January 2022 |
| | | | | KR | 10-2018-0048334 | A | 10 May 2018 |
| | | | | KR | 10-2024-0135590 | A | 11 September 2024 |
| | | | | KR | 10-2702424 | B1 | 04 September 2024 |
| | | | | US | 10847763 | B2 | 24 November 2020 |
| | | | | US | 2018-0123093 | A1 | 03 May 2018 |
| KR | 10-2023-0074057 | A | 26 May 2023 | None | | | |
| KR | 10-2023-0068802 | A | 18 May 2023 | CN | 118265609 | A | 28 June 2024 |
| | | | | WO | 2023-085597 | A1 | 19 May 2023 |
| KR | 10-2022-0112213 | A | 10 August 2022 | EP | 4287366 | A1 | 06 December 2023 |
| | | | | KR | 10-2383894 | B1 | 11 April 2022 |
| | | | | KR | 10-2467608 | B1 | 18 November 2022 |
| | | | | US | 2024-0145823 | A1 | 02 May 2024 |
| | | | | WO | 2022-164255 | A1 | 04 August 2022 |
| US | 2021-0098815 | A1 | 01 April 2021 | CN | 111758172 | A | 09 October 2020 |
| | | | | CN | 111758172 | B | 25 November 2022 |
| | | | | EP | 3739648 | A1 | 18 November 2020 |
| | | | | EP | 3739648 | A4 | 26 May 2021 |
| | | | | JP | 2021-510002 | A | 08 April 2021 |
| | | | | JP | 7270889 | B2 | 11 May 2023 |
| | | | | KR | 10-2020-0009946 | A | 30 January 2020 |
| | | | | KR | 10-2382436 | B1 | 04 April 2022 |
| | | | | WO | 2020-017826 | A1 | 23 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230120750